# EUROPEAN PATENT SPECIFICATION

(11) **EP 2 728 917 B1**
(45) Date of publication and mention of the grant of the patent: **08.04.2020**
(21) Application number: 12306353.9
(22) Date of filing: 30.10.2012
(51) Int. Cl.: H04W 12/02, H04L 29/06

(54) **PROCESS FOR PROTECTING THE PRIVACY OF A USER IN A NETWORK**
VERFAHREN ZUM SCHUTZ DER PRIVATSPHÄRE EINES BENUTZERS IN EINEM NETZWERK
PROCÉDÉ DE PROTECTION DE LA VIE PRIVÉE D'UN UTILISATEUR DANS UN RÉSEAU

(43) Date of publication of application: 07.05.2014
(73) Proprietor: Alcatel Lucent, 91620 Nozay (FR)
(72) Inventor: Kostadinov, Dimitre Davidov, 91620 Nozay (FR); Bouzid, Makram, 91620 Nozay (FR); Aghasaryan, Armen, 91620 Nozay (FR)
(74) Representative: Browne, Robin Forsythe

(56) References cited:
- US-A1- 2011 178 943
- ESMA AIMEUR ET AL: "Reconstructing Profiles from Information Disseminated on the Internet", PRIVACY, SECURITY, RISK AND TRUST (PASSAT), 2012 INTERNATIONAL CONFERENCE ON AND 2012 INTERNATIONAL CONFERNECE ON SOCIAL COMPUTING (SOCIALCOM), IEEE, 3 September 2012 (2012-09-03), pages 875-883, XP032302834, DOI: 10.1109/SOCIALCOM-PASSAT.2012.38 ISBN: 978-1-4673-5638-1
- CHIEMI WATANABE ET AL: "PrIvacy Risks And Countermeasures In Publishing And Mining Social Network Data", COLLABORATIVE COMPUTING: NETWORKING, APPLICATIONS AND WORKSHARING (COLLABORATECOM), 2011 7TH INTERNATIONAL CONFERENCE ON, ICST, 15 October 2011 (2011-10-15), pages 55-66, XP032106362, ISBN: 978-1-4673-0683-6
- MOHAMMAD ALAGGAN ET AL: "Private Similarity Computation in Distributed Systems: From Cryptography to Differential Privacy", 13 December 2011 (2011-12-13), PRINCIPLES OF DISTRIBUTED SYSTEMS, SPRINGER BERLIN HEIDELBERG, BERLIN, HEIDELBERG, PAGE(S) 357 - 377, XP019170798, ISBN: 978-3-642-25872-5 * abstract * * page 357 - page 364 *

## Description

The invention relates to a process for protecting the privacy of a user in a network to which said user is connected through his terminal, such as an application comprising means for implementing such a process and an architecture comprising such an application.

Collection of personal data about users of services in a network is widespread, notably for business intelligence studies, social surveys, opinions poll, or any other studies for which said users do not have to reveal their identity. To do so, such services can notably require analytic engines to collect and analyse personal data of their users.

In particular, for protecting privacy of their users, services generally remove from the row flow of data personal data that could be explicit identifiers for said users, such as a name or surname, a social security number or an IP (Internet Protocol) address, before delivering said row flow to the analytic engines.

However, some of personal data of a user, even if they cannot be considered a priori as explicit identifiers, can all the same be used to identify said user when combined with other personal data. Such combinations can notably identify a user uniquely or allow identification of said user among a small set of potential users with equivalent characteristics. This can be the case for example with the university where said user has been graduated, the nationality, or the company where said user works.

Consequently, a malicious analytic engine that get access to a combination of such personal data can send queries to publicly available data sources, such as web search tools, social networks or other public databases to obtain data that are explicit identifiers for the user. Moreover, identification of a user can give to such a malicious analytic engine access to sensitive information about said user that can be available among the personal data of said user, such as his voting choices or his eventual specific diseases.

To protect privacy of users, several techniques have been proposed. For example, there are some solutions that ensure to a user that personal data he submits to a service will enable to identify at least k users (k being an integer), notably in such a way that it would be difficult for an analytic engine to identify said user among said k users. Such a solution is described with more details in the article "Privacy Preserving Publishing on Multiple Quasi-Identifiers" (J. EPI, Y. TAO, J. LI, X. XIAO, 25th International Conference on Data Engineering, IEEE, pp. 1132-1135, March 29th, 2009- April 2nd, 2009), wherein the anonymity of a user in ensured by splitting tables in a database to hide identifiers of said user. Moreover, this solution aims at minimising information loss and keeping in order identifiers of other k-1 users (so called "quasi-identifiers") in order to allow retrieval of the initial database with some fuzziness according to the anonymity requirements.

Another known solution for protecting privacy of users is disclosed in the article "Differential Privacy: A Survey of Results" (in "Theory and Applications of Models of Computation", C. DWORK, TAMC, Springer Verlag, April 2008). This solution aims at avoiding inferring individual information about a user while querying an analytic engine which provides aggregated personal data. In particular, the analytic engine should take the same computing time, even if it does not contain the required data, and should be insensitive to adding or removing a single row.

However, this solution only preserves privacy of the user in the context of statistical data providing, i.e. as all personal data of the user are stored in an analytic engine that provides such statistical system. Thus, this solution cannot really guarantee the user's anonymity per se, as for example during implicit communication between said user and an analytic engine which requires personal data of said user to provide statistical data.

Another common solution for protecting the privacy of the user consists in anonymizing data of said user by replacing the explicit identifiers of said user by fictive ones. For example, such a solution can provide for replacing the column "social security number" in the profile of the user by an auto incremented variable.

However, this solution also encounters limitations, as users' identifiers are generally not known in advance, and sometimes said users are even not aware that some data that are not explicit identifiers when they are considered on their own can be gathered to form a combination which can identify them as well as such explicit identifiers.

The invention aims to improve the prior art by proposing a process that allows protecting users privacy per se when analytic engines requires personal data of said users, said process ensuring notably that personal data of a user that are known as explicit identifiers of said user would never be communicated to such a analytic engine.

For that purpose, and according to a first aspect, the invention relates to a process, carried out by an application (3), for protecting the privacy of a user in a network to which said user is connected through his terminal, the process in accordance with claim 1.

According to a second aspect, the invention relates to an application for protecting the privacy of a user in accordance with claim 6.

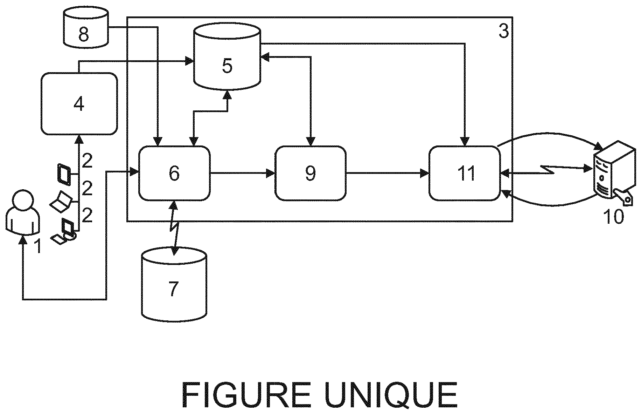

Other aspects and advantages of the invention will become apparent in the following description made with reference to the appended figure that represents an architecture comprising means for implementing a process according to the invention.

In relation to this figure, a process for protecting the privacy of a user 1 in a network to which said user is connected through his terminal 2, such as an application 3 comprising means for implementing such a process and an architecture for a network comprising such an application 3, would be described below.

As represented, the terminal 2 of the user 1 can be a personal computer, such as a desk computer or a laptop computer, or a mobile terminal such as a smartphone.

The user 1 has notably a profile that comprises personal data of said user. The personal data comprises explicit identifiers of said user, i.e. data that can allow on their own identification of the user 1, such as a name, a surname, a social security number or an IP address. The personal data also comprises other types of data that can be common to several users, such as a birthdate, a birthplace, a city, a former university or a country, and thus cannot be used on their own to identify explicitly the user 1.

The architecture comprises a profile building module 4 that can be implemented into the terminal 2, said module comprising means for building the profile of the user 1. In a known manner, the profile building module 4 can be adapted to build explicitly the profile by submitting questionnaires to the user 1 for collecting his personal data, as well as to build implicitly said profile by basing on consumption traces of said user in the network.

The profile building module 4 also comprises means for storing the profile of the user 1. As represented, the application 3 comprises a database 5 for storing the profile of the user 1, the profile building module 4 interacting with said application to store said profile in said database.

To ensure a better privacy to the user 1, the application 3 can notably be implemented into the terminal 2 of said user.

It is obvious that explicit identifiers data should not be communicated anyhow to analytic engines as said engines require personal data of the user 1. However, some other personal data that cannot be used on their own to identify the user 1 can nevertheless be combined with other personal data to allow together such identification. This can be the case for example with the birthplace, the birthdate, the current address or the former university of the user 1.

To avoid communication of such hazardous combinations, the process provides for analysing the profile of the user 1 to build a set of possible combinations of personal data that are susceptible to allow together identification of said user. Thus, the process allows finding alternative identifiers for the user 1. To do so, the application 3 comprises a discovery manager module 6 comprising means for analysing the profile of the user 1 to build such combinations. In particular, the discovery manager module 6 interacts with the database 5 for analysing the profile stored in said database.

In particular, combinations can be built so that the number of data comprised in said combinations is strictly lower than a predefined upper bound, so as to avoid the combinatorial explosion of the number of possible combinations. Indeed, combinations of high complexity, i.e. with a large size of data, are less probable of being used by a malicious analytic engine than shorter combinations.

To avoid such a combinatorial explosion, the discovery manager module 6 can also be adapted to interact with external sources of information in the architecture, so as to identify the dependencies between personal data of the user 1. For example, if both a city and a country are available in the profile of the user 1 as personal data about the place of birth of said user, the discovery manager module 6 can be adapted to consider said data as dependent from each other and to group them during the building of combinations.

The process further provides for testing the combinations, so as to identify among them the combinations that can allow identification of the user 1. Thus, the process provides for formulating a set of corresponding queries for each of the built combinations and for sending said queries to publicly available data sources 7 of the architecture. To do so, the discovery manager module 6 comprises means for formulating the queries and means for sending said queries to data sources 7.

The publicly available data sources 7 can be for instance web search engines, such as Google®, or dedicated social networking sites, such as Facebook®, Twitter@ or LinkedIn®.

The process further provides for parsing responses from data sources 7 to its queries to check the presence in said responses of explicit identifiers of at least k users in the network, including explicit identifiers of the user 1, k being an integer.

Indeed, some combinations of personal data can lead to responses with only explicit identifiers of the user 1, thus these combinations can also be considered themselves as explicit identifiers of said users. But most of combinations can lead to responses with explicit identifiers of more than one user, as, for example, many users can share the same place of birth and current address.

Nevertheless, if the responses corresponding to a given combination of personal data comprise too few explicit identifiers of different users, the privacy of the user 1 can be notwithstanding compromised. Thus, the process also provides for storing combinations whose corresponding set of queries trigger responses that contain explicit identifiers of less than a predefined number k of different users.

To do so, the discovery manager module 6 comprises means for parsing responses from data sources 7 to the queries to check the presence in said responses of explicit identifiers of at least k users, including explicit identifiers of the user 1, such as means for storing combinations whose corresponding set of queries trigger responses that contain explicit identifiers of less than k users.

In particular, the process provides for parsing responses from data sources 7 by comparing personal data that are contained in said responses to personal data that are identified as explicit identifiers in the profile of the user 1 and/or to personal data that are known as explicit identifiers of other users of the network.

To do so, the means for parsing of the discovery manager module 6 are adapted to match the responses with personal data of the profile of the user 1 that is stored in the database 5, so as to identify in said responses the personal data that are known as explicit identifiers of the user 1. Moreover, the means for parsing of the discovery module 6 are adapted to interact with an identifier statistics database 8 of the architecture, wherein explicit identifiers of other users of the network are stored, so as to check if the personal data that are contained in the responses are known to be explicit identifiers of such users.

Thus, if the responses contain true explicit identifiers of less than k users, the means for storing of the discovery manager module 6 store the corresponding data combinations as alternative identifiers of the user 1. To do so, the database 5 can be adapted for storing such alternative identifiers combinations, the means for storing of the discovery manager module 6 interacting with said database for storing said combinations into said database.

Moreover, to avoid a combinatorial explosion of the number of possible personal data combinations, the discovery manager module 6 can be adapted to stop any further analysis on a data combination that has been identified as alternative identifier, as it is obviously useless to build further superset combinations including such a relevant combination.

The process can provide that the integer k is configured by the user 1. To do so, the discovery manager module 6 comprises means for allowing the user 1 to configure the integer k.

In particular, the process can provide for returning to the user 1 the responses from data sources 7, so that said user validates or not the storing of the corresponding data combinations according to said responses, the integer k further being configured according to said validation.

To do so, the means for parsing of the discovery manager module 6 are adapted to return to the user 1 the responses from data sources 7 to a set of queries based on a determined data combination. The user 1 will browse the responses on his terminal 2, notably for checking if said responses contain a sufficient number of explicit identifiers of different other users. Indeed, the user 1 can for example use different nicknames in different data sources 7 and the discovery manager module 6 can wrongly consider said nicknames as explicit identifiers of other users, even if said nicknames are all linked to the user 1 himself.

Thus, if the user 1 considers that the returned responses do not contain enough different explicit identifiers, i.e. if the number of different explicit identifiers is too small, he validates the storing of the data combinations that correspond to said responses, for example by activating a dedicated interactive button that is displayed on his terminal 2 by the means for parsing of the discovery manager module 6, so that the means for storing store said combinations in the database 5 while the means for configuring configure the integer k, i.e. the required minimum number of explicit identifiers, according to said validation.

Thus, the configured integer k is memorised as a threshold that the means for parsing of the discovery manager module 6 will be adapted to use for determining if a data combination if safe enough or if said combination should be stored as alternative identifier of the user 1. In particular, the means for parsing will be adapted to compare to the threshold integer k the number of different explicit identifiers contained in the responses from data sources 7 that are indirectly triggered by the tested data combination.

According to another embodiment, the k integer can be already pre-defined in the means for configuring of the discovery manager module 6.

Once alternative identifiers combinations have been detected, the process provides for partitioning the profile of the user 1 into segments for separating in said profile personal data that are comprised in said stored combinations. To do so, the application 3 comprises a profile slicer module 9 comprising means for partitioning the profile of the user 1 into such segments.

In relation to the figure, the profile slicer module 9 interacts with the discovery manager module 6 and the database 5 for getting the data combinations that have been previously stored as alternative identifiers of the user 1 and for partitioning in segments the profile of said user accordingly.

For optimization purposes, the profile slicer module 9 can be adapted to store in the database 5 references to generated segments instead of said segments per se. According to a variant, the profile slicer module 9 can build equivalence classes of personal data and then define rules for deciding which personal data of which equivalence classes could be provided in a same segment. For example, if an alternative identifier combination contains a country and a name of school as personal data, then the profile slicer module 9 will put the city or the region of said school and said country in the same equivalence class of the country, so that said slicer module will never gather said country, said city or said region in a same segment.

Thus, as an analytic engine 10 sends a request for collecting personal data of the user 1, the process will send to said analytic engine a relevant segment of the profile of said user according to said request. To do so, the application 3 comprises a privacy preserving profile communicator module 11 comprising means for receiving the request of such an analytic engine 10, such as means for sending to said analytic engine the most relevant segment from the profile slicer module 9 according to the request of said analytic engine.

In particular, the request of the analytic engine 10 comprises specification about the type of requested personal data and/or the priority between said requested data. For example, the request can concern the user's 1 profession, country, year of birth and education, while specifying that the profession has a higher priority than the education level.

The privacy preserving profile communicator module 11 interacts with the profile slicer module 9 and/or the database 5 to identify the most relevant segment according to the request and sends said segment to the analytic engine 10. In particular, if the educational level and the profession have been previously separated into different segments because they form together an alternative identifier of the user 1, the profile slicer module 9 will send to the module 11 a segment that contains only the profession, since said profession has a higher priority than the educational level, and the module 11 will send said segment with said profession to the analytic engine 10.

Thus, personal data of the user 1 are communicated to analytic engines 10 without taking the risk that said analytic engines retrieve explicit identifiers of said user and therefore discover any sensitive personal data of said user.

The process of the invention can protect privacy of the user 1 with respect to a large category of analytic engines 10. In particular, the process can be extended to service providers wherein the user 1 is identified with a nickname and does not wish to provide his real identity. Indeed, even if the user 1 uses a nickname, he can also communicate other types of personal data that can be combined with other data to form alternative identifier data combinations and said combinations can be used by analytic engines 10 of such service providers to find the user's identity by interacting with other data sources 7 wherein said identity is available, such as a personal web site or a public profile of a social networking site like LinkedIn®, Twitter@ or Facebook®.

For the above mentioned reasons, the process has obvious benefits for the user 1, as said user is guaranteed to communicate his personal data to analytic engines 10 without taking the risk to be identified, even indirectly. But the process also presents benefits for such analytic engines 10, as users 1 will be less reluctant to provide their personal data to them. Thus, such analytic engines 10 will be able to gather more personal data.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process, carried out by an application (3), for protecting the privacy of a user (1) in a network to which said user is connected through his terminal (2), said user having a profile that comprises personal data of said user, wherein the personal data comprises explicit identifiers of said user that can allow on their own identification of the user and other types of data that cannot be used on their own to explicitly identify the user,
said process providing for:
- analysing, by a discovery manager module (6) of the application (3), the profile of said user to build a set of possible combinations from the other types of data that togther allow for explicit identification of said user;
- formulating, by the discovery manager module (6), a set of corresponding queries for each of said combinations;
- sending, by the discovery manager module (6), said queries to publicly available data sources (7);
- parsing, by the discovery manager module (6), responses from said data sources to said queries to check the presence in said responses of explicit identifiers of at least k users in the network, including explicit identifiers of said user, k being an integer;
- storing, by the discovery manager module (6), as alternative identifiers of said user combinations whose corresponding set of queries trigger responses that contain explicit identifiers of less than k users including explicit identifiers of said user
- partitioning, by a profile slicer module (9) of the application (3), the combinations of the alternative identifiers into segments for separating data that are comprised together in said stored combinations;
receiving, by a privacy preserving profile communication module (11) of the application (3), a request from an analytic engine (10) for collecting personal data of said user, wherein the request comprises specification about the type of requested personal data and/or priority between said requested data;
identifying, by a privacy preserving profile communication module (11), a segment comprising data with a highest priority from the segments according to the request, if the requested data form an alternative identifier of said user that has been separated into the segments; and
sending, by a privacy preserving profile communication module (11), to the analytic engine (10) the segment comprising data with the highest priority.

2. Process according to claim 1, **characterized in that** combinations are built so that the number of data comprised in said combinations is strictly lower than a predefined upper bound.

3. Process according to any of claims 1 or 2, **characterized in that** it provides for parsing responses from data sources (7) by comparing personal data that are contained in said responses to personal data that are identified as explicit identifiers in the profile of the user (1) and/or to personal data that are known as explicit identifiers of other users in the network.

4. Process according to any of claims 1 to 3, **characterized in that** the integer k is configured by the user (1).

5. Process according to claim 4, **characterized in that** it provide for returning to the user (1) the responses from data sources (7), so that said user validates or not the storing of the corresponding data combinations according to said responses, the integer k further being configured according to said validation.

6. Application (3) for protecting the privacy of a user (1) in a network to which said user is connected through his terminal (2), said user having a profile that comprise personal data of said user, said application comprising:
- a discovery manager module (6);
- a profile slicer module (9); and
- a privacy preserving profile communication module (11);
and wherein the application is configured to carry out the processes according to any preceding claim.

7. Application (3) according to claim 6, **characterized in that** it comprises a database (5) for storing the profile of the user (1) and for storing the combinations whose corresponding set of queries trigger responses that contain explicit identifiers of less than k users.

## Patentansprüche

1. Verfahren, das bei einer Anmeldung (3) ausgeführt wird, zum Schutz der Privatsphäre eines Benutzers (1) in einem Netzwerk, mit dem der Benutzer über sein Endgerät (2) verbunden ist, wobei der Benutzer ein Profil besitzt, das persönliche Daten des Benutzers umfasst, wobei die persönlichen Daten explizite Identifikatoren des Benutzers, die eine alleinige Identifizierung des Benutzers ermöglichen können, und andere Datentypen, die nicht allein zum expliziten Identifizieren des Benutzers verwendet werden können, umfassen, wobei das Verfahren folgende Schritte vorsieht:
- Analysieren, durch ein Entdeckungsverwaltungsmodul (6) der Anmeldung (3), des Profils des Benutzers, um einen Satz von möglichen Kombinationen aus den anderen Datentypen zu bilden, die zusammen eine explizite Identifizierung des Benutzers ermöglichen;
- Formulieren, durch das Entdeckungsverwaltungsmodul (6), eines Satzes von entsprechenden Abfragen für jede der Kombinationen;
- Senden der Abfragen durch das Entdeckungsverwaltungsmodul (6) an öffentlich zugängliche Datenquellen (7);
- Parsen, durch das Entdeckungsverwaltungsmodul (6), der Antworten der Datenquellen auf die Abfragen, um das Vorhandensein in den Antworten von mindestens k expliziten Identifikatoren von mindestens k Benutzern im Netzwerk, einschließlich expliziter Identifikatoren des Benutzers, zu überprüfen, wobei k eine ganze Zahl ist;
- Speichern, durch das Entdeckungsverwaltungsmodul (6), als alternative Identifikatoren der Benutzerkombinationen, deren entsprechender Satz von Abfragen Antworten auslöst, die explizite Identifikatoren von weniger als k Benutzern, einschließlich expliziter Identifikatoren des Benutzers, enthalten;
- Partitionierung, durch ein Profilschneidemodul (9) der Anmeldung (3), der Kombinationen der alternativen Identifikatoren in Segmente zum Separieren von Daten, die zusammen in den gespeicherten Kombinationen enthalten sind;
- Empfangen, durch ein privatsphärenwahrendes Profil-Kommunikationsmodul (11) der Anmeldung (3), einer Anfrage von einer Analysemaschine (10) zum Sammeln persönlicher Daten von Hilfsbenutzern, wobei die Anfragen eine Angabe über den angeforderten persönlichen Datentyp und/oder die Priorität zwischen den angeforderten Daten aufweist;
- Identifizieren, durch ein privatsphärenwahrendendes Profil-Kommunikationsmodul (11), eines Segments, das Daten mit höchster Priorität aus den Segmenten I gemäß der Anforderung umfasst wenn die angeforderten Daten einen alternativen Identifikator des Benutzers bilden, der in die Segmente getrennt worden ist; und
- Senden, durch ein privatsphärenwahrendes Profil-Kommunikationsmodul (11), des Segments, das Daten mit höchster Priorität umfasst, an die Analysemaschine (10).

2. Verfahren nach Anspruch 1,
**dadurch gekennzeichnet,**
**dass** die Kombinationen derart aufgebaut werden, dass die Anzahl der in den Kombinationen enthaltenen Daten ausschließlich unterhalb einer vordefinierten Obergrenze liegt.

3. Verfahren nach einem der Ansprüche 1 oder 2,
**dadurch gekennzeichnet,**
**dass** für das Parsen Antworten aus Datenquellen (7) vorgesehen werden, und zwar durch Vergleichen von in den Antworten enthaltenen persönlichen Daten mit persönlichen Daten, die als explizite Identifikatoren im Profil des Benutzers (1) identifiziert werden, und/oder persönlichen Daten, die als explizite Identifikatoren anderer Benutzer im Netz bekannt sind.

4. Verfahren nach einem der Ansprüche 1 bis 3,
**dadurch gekennzeichnet,**
**dass** die ganze Zahl k vom Benutzer (1) konfiguriert wird.

5. Verfahren nach Anspruch 4,
**dadurch gekennzeichnet,**
**dass** eine Rückgabe der Antworten von Datenquellen (7) an den Benutzer (1) derart vorgesehen ist, dass der Benutzer die Speicherung der entsprechenden Datenkombinationen in Abhängigkeit von den Antworten validiert oder nicht, wobei die ganze Zahl k außerdem in Abhängigkeit von der Validierung konfiguriert wird.

6. Anmeldung (3) zum Schutz der Privatsphäre eines Benutzers (1) in einem Netzwerk, mit dem der Benutzer über sein Endgerät (2) verbunden ist, wobei der Benutzer ein Profil besitzt, das persönliche Daten des Benutzers enthält, wobei die Anmeldung folgendes umfasst:
- ein Entdeckungsverwaltungsmodul (6);
- ein Profilschneidemodul (9); und
- ein privatsphärenwahrendes Profil-Kommunikationsmodul (11); und
wobei die Anmeldung derart konfiguriert ist, dass sie das Verfahren nach einem der vorhergehenden Anspruch ausführt.

7. Anmeldung (3) gemäß Anspruch 6,
**dadurch gekennzeichnet,**
**dass** sie eine Datenbank (5) zum Speichern des Profils des Benutzers (1) und zum Speichern der Kombinationen aufweist, deren entsprechender Satz von Abfragen Antworten auslöst, die explizite Identifikatoren von weniger als k Benutzern enthalten.

## Revendications

1. Procédé mis en œuvre par une application (3), pour la protection de la vie privée d'un utilisateur (1) dans un réseau auquel ledit utilisateur est connecté via son terminal (2), ledit utilisateur présentant un profil comprenant des données personnelles dudit utilisateur, selon lequel les données personnelles comprennent des identifiants explicites dudit utilisateur qui peuvent permettre d'identifier à eux seuls l'utilisateur et d'autres types de données qui ne peuvent être utilisés à eux seuls d'identifier explicitement l'utilisateur, ledit procédé comportant :
l'analyse, par le biais d'un module de gestion de découverte (6) de l'application (3), du profil dudit utilisateur afin de construire un ensemble de combinaisons possibles à partir des autres types de données qui, ensemble, permettent l'identification explicite dudit utilisateur ;
la formulation, par le module de gestion de découverte (6), d'un ensemble de requêtes correspondantes pour chacune desdites combinaisons ;
l'envoi, par le module de gestion de découverte (6), desdites requêtes à des sources de données publiques (7) ;
l'analyse, par le module de gestion de découverte (6), des réponses en provenance desdites sources de données auxdites requêtes afin de vérifier la présence dans lesdites réponses d'identifiants explicites d'au moins k utilisateurs du réseau, y compris des identifiants explicites dudit utilisateur, k étant un entier ;
le stockage, par le module de gestion de découverte (6), en tant qu'identifiants alternatifs desdites combinaisons d'utilisateur dont les ensembles de requêtes correspondantes déclenchent des réponses qui contiennent des identifiants explicites d'un nombre d'utilisateurs inférieur à k y compris des identifiants explicites dudit utilisateur ;
le partitionnement, par le biais d'un module de répartition de profil (9) de l'application (3), des combinaisons des identifiants alternatifs en segments afin de séparer des données qui sont comprises ensemble dans lesdites combinaisons stockées ;
la réception, par le biais d'un module de communication de profil préservant la vie privée (11) de l'application (3), d'une requête en provenance d'un moteur d'analyse (10) afin de collecter des données personnelles dudit utilisateur, selon lequel la requête comprend une spécification relative aux types de données personnelles requis et/ou d'une priorité entre lesdites données requises ;
l'identification, par le biais d'un module de communication de profil préservant la vie privée (11), d'un segment comprenant des données présentant une priorité la plus haute à partir des segments en fonction de la requête, si les données requises forment un identifiant alternatif dudit utilisateur ayant été séparé en segments ; et
l'envoi, par le biais d'un module de communication de profil préservant la vie privée (11), au moteur d'analyse (10), du segment comprenant les données présentant la priorité la plus haute.

2. Procédé selon la revendication 1, **caractérisé en ce que** les combinaisons sont construites de telle sorte que le nombre de données comprises dans lesdites combinaisons est strictement inférieur à une limite supérieure prédéfinie.

3. Procédé selon la revendication 1 ou la revendication 2, **caractérisé en ce qu'**il comporte l'analyse de réponses en provenance de sources de données (7) en comparant les données personnelles contenues dans lesdites réponses à des données personnelles qui sont identifiées en tant qu'identifiants explicites dans le profil de l'utilisateur (1) et/ou à des données personnelles qui sont connues comme étant des identifiants explicites d'autres utilisateurs du réseau.

4. Procédé selon l'une quelconque des revendications 1 à 3, **caractérisé en ce que** l'entier k est configuré par l'utilisateur (1).

5. Procédé selon la revendication 4, **caractérisé en ce qu'**il comporte le renvoi à l'utilisateur (1) des réponses en provenance des sources de données (7), de sorte que ledit utilisateur puisse valider le stockage ou non des combinaisons de données correspondantes en fonction desdites réponses, l'entier k étant en outre configuré en fonction de ladite validation.

6. Application (3) pour la protection de la vie privée d'un utilisateur (1) dans un réseau auquel ledit utilisateur est connecté via son terminal (2), ledit utilisateur présentant un profil comprenant des données personnelles dudit utilisateur, ladite application comprenant :
un module de gestion de découverte (6) ;
un module de cisaillement de profil (9) ; et
un module de communication de profil préservant la vie privée (11) ; et
selon laquelle l'application est configurée pour effectuer la mise en œuvre du procédé selon l'une quelconque des revendications précédentes.

7. Application (3) selon la revendication 6, **caractérisée en ce qu'**elle comprend une base de données (5) pour le stockage du profil de l'utilisateur (1) et pour stocker les combinaisons dont les ensembles de requêtes correspondantes font déclencher des réponses qui contiennent des identifiants explicites inférieurs à un nombre k d'utilisateurs.
